(19) Europäisches Patentamt
European Patent Office
Office européen des brevets

(11) Veröffentlichungsnummer: **0 508 057 A1**

# (12) EUROPÄISCHE PATENTANMELDUNG

(21) Anmeldenummer: **92102128.3**

(22) Anmeldetag: **08.02.92**

(51) Int. Cl.⁵: **C08F 283/02**, //(C08F283/02, 214:06)

(30) Priorität: **10.04.91 DE 4111628**

(43) Veröffentlichungstag der Anmeldung: **14.10.92 Patentblatt 92/42**

(84) Benannte Vertragsstaaten: **BE CH DE FR GB IT LI NL SE**

(71) Anmelder: **HÜLS AKTIENGESELLSCHAFT - RSP Patente / PB 15 - Postfach 13 20 W-4370 Marl 1(DE)**

(72) Erfinder: **Schmidt, Frank, Dr. Herbrüggenstrasse 148a W-4300 Essen 11(DE)**
Erfinder: **Gardiewski, Neidhard Im Kreuzeck 3 W-4370 Marl - Polsum(DE)**

(54) **Innerlich weichgemachte Vinylchlorid-Polymerisate und Verfahren zu deren Herstellung.**

(57) Die weichgemachten Vinylchloridpolymerisate des Standes der Technik sind noch verbesserungswürdig in Bezug auf Verarbeitung und Morphologie.

Die erfindungsgemäßen Pfropfcopolymeren aus Polyvinylchlorid und Polycaprolacton (PCL) mti einem PCL-Anteil von 32 bis 40 % werden hergestellt durch Polymerisation von Vinylchlorid in Gegenwart von Polycaprolacton. Die Pfropfcopolymeren zeigen gute Transparenz, Homogenität und gute Verarbeitungseigenschaften.

Verwendet werden die erfindungsgemäßen Copolymerisate zur Herstellung von Fertigteilen im medizinischen Bereich, wie z. B. Blutbeuteln und Dialyseschläuchen.

EP 0 508 057 A1

Das allgemein übliche Verfahren zum Weichstellen von Vinylchloridpolymerisaten besteht darin, daß die Polymerisate mit hochsiedenden organischen Verbindungen homogen vermischt werden. Weichmacher dieser Art werden als "äußere" Weichmacher bezeichnet und führen zu unerwünschten Erscheinungen, wie Geruch, Trübung, Ausschwitzen, Versteifung und ähnlichen Änderungen von Folien, Filmen oder Formkörpern aus den weichgestellten Polymerisaten. Alle diese Nachteile beruhen auf der Flüchtigkeit des Weichmachers selbst oder auf seiner Neigung zur Diffusion an die Oberfläche der thermoplastischen Masse. Beispiele für solche Weichmacher sind Dioctylphthalat (DOP), Diisononyladipat oder Ester der Trimellithsäure (vgl. "Encyclopedia of PVC", Marcel Dekker, INC, New York 1976). Ein Einsatz in sensiblen Bereichen wie dem medizinischen Sektor (Blutbeutel, Katheterschläuche usw.) ist demzufolge problematisch.

Der Migrationsneigung dieser Monomer-Weichmacher kann durch die Verwendung höhermolekularer Verbindungen begegnet werden. Derartige Permanent-Weichmacher besitzen jedoch aufgrund ihrer eingeschränkten Mobilität in der PVC-Matrix eine geringere Effizienz. Zudem bereitet ihre Einarbeitung vielfach große Probleme (C.F. Hammer in "Polymer Blends", Academic Press, New York 1978, Vol. 2).

Mit zunehmender Molmasse macht sich ein weiteres Phänomen verstärkt bemerkbar: die meist unzureichende Verträglichkeit von Polymermischungen, die sich in mangelnder Transparenz der Formteile ausdrückt.

Ethylen-Vinylacetat-Copolymere stellen solche, mit PVC nur eingeschränkt verträgliche Systeme dar. Bei hohen Vinylacetat-Gehalten können zwar transparente, jedoch harte, bei hohen Ethylen-Anteilen dagegen weiche, dafür aber eingetrübte Formkörper erhalten werden.

Durch Einführung zusätzlicher Carbonylgruppen in Form eines Terpolymerisats von Ethylen, Vinylacetat und Kohlenmonoxid läßt sich die Verträglichkeit steigern, es werden transparente Materialien erhalten. Die nur sehr kleinen Diffusionskoeffizienten von Polymeren machen allerdings aufwendige Mischverfahren bei vergleichsweise langen Verarbeitungszeiten notwendig.

Ebenfalls PVC-verträglich sind Polyester mit einem Verhältnis $CH_2$/COO von 4 bis 5 zu 1. Polycaprolacton (PCL) fällt in diese Gruppe (J. V. Koleske in "Polymer Blends", Academic Press, New York 1978, Vol. 2). Seine Anwendbarkeit beschränkt sich jedoch auf Einsatzmengen bis zu etwa 35 %, da bei höheren Anteilen die ausgeprägte Neigung der Caprolactone zur Kristallisation den gewünschten Tieftemperatureigenschaften und der Transparenz entgegensteht (D. Hardt, C. Süling, C. Lindner, L. Morbitzer, Angew. Chem. 94 (1982), 159-169 oder R. Deanin, Journal of Vinyl Technology, March 1984, Vol. 6, No. 1). Die Verarbeitungsprobleme aufgrund hoher Molmassen bestehen auch hier. So sind in Preßplatten aus solchen Blends Schlieren und nicht aufgeschlossene Stippen erkennbar.

Es wurde nun überraschenderweise gefunden, daß die Polymerisation von Vinylchlorid in Gegenwart von Polycaprolacton zum einen den Einsatz höherer PCL-Anteile erlaubt und damit z. B. niedrigere Shore-Härten ermöglicht, zum anderen einfach zu verarbeitende Produkte liefert, die im Vergleich zu den aus den Homopolymeren hergestellten Blends eine verbesserte Transparenz und Homogenität aufweisen.

Diese Pfropfcopolymeren können als "innerlich weichgemachtes" PVC aufgefaßt werden, da durch die Anbindung der Vinylchloridketten an das Polycaprolacton im Unterschied zu den Blends (vgl. fällbare Anteile, Tabelle) eine Migration des Weichmachers unterbunden wird.

Vorzugsweise angewandt wird ein Verfahren in wäßriger Suspension, bei dem die Polymerisation bis zu einem VC-Umsatz von 80 bis 90 % durchgeführt wird. Polycaprolacton und Vinylchlorid können beide vorgelegt oder aber auch VC kontinuierlich oder absatzweise bis zum gewünschten PCL/VC-Verhältnis zudosiert werden.

Die Menge des Polycaprolactons richtet sich dabei nach den Anforderungen an das Endprodukt. Für die typischen PVC-Weich-Anwendungen ist eine Shore A-Härte von 75 bis 85 anzustreben, was mit 32 bis 40 % PCL im Polymerisat erreicht werden kann. Vorzugsweise werden Produkte hergestellt, die einen PCL-Anteil von 34 bis 40 %, besonders bevorzugt von 35 bis 39 %, besitzen.

Härtere Produkte benötigen niedrigere PCL-Mengen. Solche sind in den japanischen Anmeldungen JP 85/90 208 und JP 84/161 419, referiert in CA 104 (8), 51560F bzw. CA 102 (4), 25580b, beschrieben, nach denen allerdings lediglich 30 % resp. 11,3 % Polycaprolacton einpolymerisiert werden.

Die Molmasse $\overline{M}_n$ des Polycaprolactons sollte sich im Bereich zwischen 10 000 und 60 000, vorzugweise 20 000 und 50 000, besonders bevorzugt 30 000 und 50 000, bewegen.

Die besten Ergebnisse werden erzielt, wenn ein Polymer mit enger Molmassenverteilung eingesetzt wird, wie es durch ionische Polymerisationsverfahren erhalten werden kann. Hierdurch ist ein hoher Pfropferfolg erzielbar. Diese Polycaprolactone werden z. B. von Union Carbide als TONE[R]-Typen und Interox als Capa[R]-Typen angeboten.

Als Suspensionsstabilisatoren sind die für die VC-Polymerisation bekannten und üblicherweise eingesetzten Verbindungstypen, wie sie z. B. im Kunststoff-Handbuch, Hrsg. Becker, Braun; 2. Polyvinylchlorid,

2

H. Felger, Hanser Verlag, 1986, Seite 144 ff., beschrieben sind, geeignet. Zu nennen sind beispielsweise Cellulose-Ether, teilvereifte Polyvinylacetate oder Gelatine-Derivate. Die Suspensionsstabilisatoren werden in der Regel in Konzentrationen von 0,05 bis 0,2 %, bezogen auf das Monomer, eingesetzt.

Für die Initiierung können alle bekannten öllöslichen, freie Radikale erzeugende Substanzen eingesetzt werden, wie beispielsweise Acetylcyclohexylsulfonylperoxid, Alkylperneodecanoate, Dialkylperoxidicarbonat, Dilaurylperoxid, Azodiisobutyronitril oder Alkylperpivalate. Der Initiator sollte in Konzentrationen von 0,01 bis 2, vorzugsweise 0,02 bis 1 Gewichtsprozent, eingesetzt werden, bei einer VC-Dosierung gegebenenfalls ebenfalls dosiert, um eine gleichmäßige Radikalkonzentration zu gewährleisten.

Als weitere Hilfsstoffe können pH-Puffersubstanzen, wie Phosphate, Ammoniumsalze, Alkalicarbonate, Hilfsstoffe, gegen Wandanbackungen oder Antioxidantien verwendet werden.

Die Polymerisationstemperatur sollte zwischen 40 und 70 °C betragen.

Zur weiteren Erläuterung der Erfindung dienen die folgenden Beispiele. Die angegebenen Teile sind Gewichtsteile.

Beispiel 1

In einem mit Impellerrührer und Pfaudlerstromstörer ausgerüsteten 40-1-Polymerisationskessel aus rostfreiem Stahl werden 20 000 Teile Wasser, 7 800 Teile Vinylchlorid und 4 900 Teile eines Polycaprolactons ($\overline{M}_n$ = 42 000; U = $\overline{M}_w/\overline{M}_n$-1 = 0,6) mit 65 Teilen zu 72 % verseiften Polyvinylacetat dispergiert. Nach Zusatz von 10 Teilen Kaliumdihydrogenphosphat zur Abpufferung und 16 Teilen t-Butylperoxopivalat als Initiator wird zunächst eine Stunde bei Raumtemperatur gerührt und anschließend die Polymerisation durch Aufheizen auf 55 °C gestartet. Nach einem Umsatz von 85 % wird bei einem Enddruck von 2 bar auf Raumtemperatur abgekühlt und aufgearbeitet.

Das Produkt enthält 39 % Polycaprolacton.

Die analytischen Daten des Polymerisats und die anwendungstechnischen Untersuchungsergebnisse daraus hergestellter Preßplatten sind der Tabelle zu entnehmen.

Zur Herstellung der Preßplatten werden 100 Teile des Produktes mit 1,5 Teilen eines Sn-Stabilisators und 0,2 Teilen eines Gleitmittels auf der Walze bei 150 °C homogenisiert und anschließend bei 180 °C gepreßt.

Die Platten weisen eine hervorragende Transparenz und Oberfläche bei niedriger Shore-Härte und guter Reißdehnung auf.

Beispiel 2

Es wird wie in Beispiel 1 verfahren, jedoch mit dem Unterschied, daß die Mengen von Vinylchlorid und Initiator in vier gleichen Teilen vorgelegt und nach zwei, vier und sechs Stunden nachgesetzt werden. Auch hier besteht das Endprodukt zu 39 % aus PCL.

Die Tabelle enthält die an diesem Produkt gefundenen Ergebnisse analytischer und anwendungstechnischer Untersuchungen. Die Preßplatten werden hier in einer für medizinische Anwendungen üblichen Rezeptierung hergestellt.

Wiederum überzeugt bei niedriger Shore-Härte und sehr guter Reißdehnung die ausgezeichnete Transparenz und glatte Oberfläche.

Vergleichsbeispiel 1

Es wird eine Abmischung aus 65 Teilen PVC (S 7054, HÜLS AG) und 35 Teilen Polycaprolacton mit den in Beispiel 1 verwendeten Hilfsstoffen homogenisiert. Hierzu ist im Vergleich zur Verarbeitung des Polymerisats aus Beispiel 1 eine um 30 °C erhöhte Walzentemperatur von 180 °C erforderlich.

Die erhaltenen Preßplatten erreichen nicht die Transparenz der Pfropfprodukte, zudem liegt die Shore-Härte zu hoch.

Die Tabelle gibt die Untersuchungsergebnisse wieder.

Vergleichsbeispiel 2

Zur Erzielung ausreichender Flexibilität wird der Polycaprolacton-Anteil auf 39 % angehoben. Das Compound wird in einer für medizinische Anwendungen zulässigen Rezeptur hergestellt.

Wiederum ist eine erhöhte Walzentemperatur von 180 °C für die Homogenisierung notwendig. Die Transparenz der Preßplatten erreicht nicht die der erfindungsgemäß hergestellten Produkte, zudem trüben sie sich nach kurzer Zeit aufgrund beginnender Kristallisation des Polycaprolactons weiter ein und verlieren ihre Flexibilität.

Untersuchungsergebnisse finden sich in der Tabelle.

Vergleichsbeispiel 3

Es wird ein herkömmlich weichgestelltes Compound durch Mischen von 63 Teilen Standard-PVC (S 7054, HÜLS AG) und 37 Teilen Monomerweichmacher Dioctylphthalat (DOP) unter Zusatz der in Versuch 2 verwendeten medizinisch zulässigen Hilfsstoffe hergestellt.

Die Preßplatten zeigen das erwartet gute Eigenschaftsbild eines "Weich-PVC". Im Vergleich zu den erfindungsgemäß erhaltenen Produkten fällt jedoch die erheblich niedrigere Reißdehnung auf. Das Ergebnis der Extraktionsversuche verdeutlicht den Nachteil monomerer Weichmacher: aus 100 g des Materials lassen sich 25 g extrahieren, der verbleibende Rückstand ist spröde.

Tabelle

| | Bsp. 1 | Bsp. 2 | Vgl. 1 | Vgl. 2 | Vgl. 3 |
|---|---|---|---|---|---|
| Zusammensetzung | | | | | |
| PVC (%) | 61 | 61 | 65 | 61 | 63 |
| PCL (%) | 39 | 39 | 35 | 39 | |
| DOP (%) | | | | | 37 |
| Verarbeitungstemperatur (°C) | 150 | 150 | 180 | 180 | 150 |
| Shore-A | 82 | 77 | 87 | 82 | 75 |
| Reißdehnung (%) | 560 | 580 | 415 | 430 | 340 |
| Transparenz [*] (%) | 63,0 | 63,7 | 60,0 | 20,8 trübt ein | 65,1 |
| Visuelle Beurteilung der Oberfläche | gut | gut | Stippen | Stippen | gut |
| Extrahierbare Anteile (Soxhlet, IPA [**], 6 Stunden) (%) | < 2 | < 2 | 4 | 4 | 25 |
| aus Tetrahydrofuran-Lösung mit IPA fällbare Anteile [***] (%) | 94 | 95 | 64 | 62 | 63 |

[*] Tranparenz einer 6 mm starken Preßplatte bei 546 nm
[**] Isopropanol
[***] entspricht PVC- bzw. PVC/PCL-Pfropfcopolymer

**Patentansprüche**

**1.** Innerlich weichgemachtes Vinylchloridpolymerisat, das zu Fertigteilen mit hoher Transparenz verarbeitbar ist und dabei eine ausgezeichnete Beständigkeit gegen Extraktion aufweist,
dadurch gekennzeichnet,
daß die Polymerisation des Vinylchlorids in Gegenwart von Polycaprolacton erfolgt und zu einem Endprodukt mit einem PCL-Anteil von 32 bis 40 %, bevorzugt 35 bis 39 %, führt.

2.  Pfropfcopolymer nach Anspruch 1,
    dadurch gekennzeichnet,
    daß das als weichmachende Komponente eingesetzte Polycaprolacton eine mittlere Molmasse $\overline{M}_n$ von 10 000 bis 60 000, bevorzugt 30 000 bis 50 000, bei enger Molmassenverteilung aufweist.

3.  Verfahren zur Herstellung eines Polymerisats nach den Ansprüchen 1 und 2,
    dadurch gekennzeichnet,
    daß das gesamte Vinylchlorid zu Beginn der Polymerisation zugegen ist.

4.  Verfahren zur Herstellung eines Polymerisats nach den Ansprüchen 1 und 2,
    dadurch gekennzeichnet,
    daß ein Teil des Vinylchlorids vorgelegt und der Rest zusammen mit anteiligen Mengen Initiator nachgesetzt wird, bis das gewünschte PCL/VC-Verhältnis erreicht ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WORLD PATENTS INDEX LATEST<br>Derwent Publications Ltd., London, GB;<br>AN 84-154777 (25)<br>& JP-A-59 080 408 (TERUMO CORP.) 9. Mai 1984<br>* Zusammenfassung *<br>--- | 1-3 | C08F283/02<br>//(C08F283/02,<br>214:06) |
| X | WORLD PATENTS INDEX LATEST<br>Derwent Publications Ltd., London, GB;<br>AN 85-157191 (26)<br>& JP-A-60 090 208 (KANEGAFUCHI CHEM KK) 21. Mai 1985<br>* Zusammenfassung * | 1-3 | |
| D | & CHEMICAL ABSTRACTS, vol. 104, no. 8,<br>21. Mai 1985, Columbus, Ohio, US;<br>abstract no. 51560F,<br>KANEGAFUCHI CHEM IND CO LTD: 'LACTONE POLYESTER-CONTAINING VINYL CHLORIDE RESINS'<br>* Zusammenfassung *<br>--- | | |
| X | WORLD PATENTS INDEX LATEST<br>Derwent Publications Ltd., London, GB;<br>AN 84-265927 (43)<br>& JP-A-59 161 419 (MITSUBISHI MONSANTO KK) 12. September 1984<br>* Zusammenfassung * | 1-2 | |
| D | & CHEMICAL ABSTRACTS, vol. 102, no. 4,<br>12. September 1984, Columbus, Ohio, US;<br>abstract no. 25580B,<br>MITSUBISHI MONSANTO KASEI VINYL KK: 'VINYL CHLORIDE POLYMERS'<br>* Zusammenfassung *<br>--- | | **RECHERCHIERTE SACHGEBIETE (Int. Cl.5)**<br><br>C08F<br>C08L |
| A | EP-A-0 391 455 (SOLVAY & CIE)<br>* Ansprüche 1-12 *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 28 APRIL 1992 | PERSSON E.K. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...........................................................................
& : Mitglied der gleichen Patentfamilie, übereinstimmendes
    Dokument

EPO FORM 1503 03.82 (P0403)